# EUROPÄISCHE PATENTANMELDUNG

(11) **EP 1 241 301 A2**
(43) Veröffentlichungstag der Anmeldung: **18.09.2002**
(21) Anmeldenummer: 02005508.3
(22) Anmeldetag: 11.03.2002
(51) Int. Cl.: E03D 5/10

(54) **Klosett mit einer Sensoreinheit**

(30) Priorität: 12.03.2001 DE 10112179
(71) Anmelder: Aquis Sanitär AG, 9445 Rebstein (CH)
(72) Erfinder: Wawnla, Andreas, 9443 Widnau (CH); Büchel, Helmut, 9435 Heerbrugg (CH)
(74) Vertreter: Patentanwälte Eisele, Otten, Roth & Dobler

(57) **Zusammenfassung**

Es wird ein Klosett (1), insbesondere Wasserklosett bzw. Urinal, mit sensorgesteuerter Spülung vorgeschlagen, bei dem der Austausch einer Batterie vermieden oder zumindest eine erheblich längere Laufzeit sichergestellt ist. Diese Aufgabe wird dadurch gelöst, dass eine Solarzelle (22, 23) für die Energieversorgung vorgesehen ist.

## Beschreibung

Die Erfindung betrifft ein Klosett, insbesondere Wasserklosett bzw. Urinal, mit einer Sensoreinheit nach dem Oberbegriff des Anspruchs 1.

Klosette mit elektronischer Spülung, im Folgenden auch als sensorgesteuerte Spülung bezeichnet, sind bereits Stand der Technik. Hierbei wird über einen Sensor die Anwesenheit einer Person auf dem WC bzw. vor dem Urinal erfasst und nach einer gewissen Zeitverzögerung oder beim Verlassen der Toilette durch die Person eine automatische Wasserspülung ausgelöst. Diese selbsttätige Spülung dient der Verbesserung der hygienischen Verhältnisse in der entsprechenden Toilette. Bisherige Wasserspülungen sind mit einem Netzanschluss oder einer Batterie ausgestattet, die die sensorgesteuerte Spülung mit elektrischer Energie versorgen. Da die Speicherkapazität solcher Batterien mit akzeptabler Größe zwangsweise begrenzt ist, ist bei Batteriebetrieb in bestimmten Zeitabschnitten ein Austausch der Batterie erforderlich.

Da derartige Klosette mit sensorgesteuerter Spülung in der Regel in öffentlichen Gebäuden, wie Flughäfen, Bahnhöfen, usw. verwendet werden, ist der Austausch einer entsprechenden Vielzahl von Batterien mit einem entsprechenden Aufwand verbunden.

Aufgabe der Erfindung ist es daher, ein Klosett, insbesondere Wasserklosett bzw. Urinal, mit einer sensorgesteuerten Spülung vorzuschlagen, bei dem der Austausch einer Batterie vermieden oder zumindest eine erheblich längere Laufzeit sichergestellt ist.

Diese Aufgabe wird, ausgehend von einem Klosett der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Klosett dadurch aus, dass eine Solarzelle für die Energieversorgung vorgesehen ist.

Entgegen der vielfach verbreiteten Ansicht, dass eine Solarzelle im Innern von Gebäuden, vor allem in fensterlosen Räumen, keinen nutzbaren Effekt mit sich bringt, hat es sich gezeigt, dass sehr wohl eine Energieausnutzung des Kunstund/oder Tageslichts innerhalb von geschlossenen Räumen wie Toiletten in einem Ausmaß möglich ist, um wenigstens zeitweise damit eine sensorgesteuerte Wasserspülung zu betreiben. Beispielsweise kann die Solarzelle derart ausgebildet werden, so dass der gesamte oder ein Teil des Energiebedarfs des Klosetts durch die Solarzelle gedeckt wird.

In einer Weiterbildung der Erfindung wird ein aufladbarer elektrischer Speicher für die Solarzelle vorgesehen. Als zusätzlicher Speicher für die Solarzelle wird in dieser Kombination bevorzugt ein Kondensator verwendet, der eine ausreichende Kapazität aufweist, um die in Stillstandzeiten der Spülung innerhalb geschlossener Räume zur Verfügung stehende Solarenergie in ausreichendem Maße zu speichern und für den Einsatz der Spülung sowie für den Betrieb des Klosetts bereitzustellen. Ein Kondensator ist gegenüber einem Akku kostengünstiger und weist in der Regel eine längere Standzeit auf. Der Speicher kann auch als Akku und/oder wenigstens teilweise aufladbare Batterie ausgebildet werden.

Möglicherweise kann auch ein Akku und/oder eine nicht aufladbare Batterie zur Zufuhr von nicht solarer Energie dienen, wobei diese nicht als Zwischenspeicher für Solarenergie vorgesehen sind.

Bevorzugt wird das Klosett neben der erfindungsgemäßen Solarzelle auch mit zusätzlicher, nicht solarer Energie über eine Batterie und/oder einen Akku betrieben. Durch die nicht solare Energieversorgung über die Batterie oder den Akku ist eine elektrische Grundversorgung der Wasserspülung sichergestellt, während die Solarzelle in der Lage ist, in Zeiten ausreichender Lichteinstrahlung den Energieverbrauch aus dem Akku zu mindern oder zu stoppen und somit deren Lebensdauer entscheidend zu verlängern. Austauschzyklen für die Batterie oder den Akku in der Größenordnung von 10 Jahren sind durch die Kombination einer Batterie, eines Akkus und/oder Kondensators mit erfindungsgemäßen Solarzellen durchaus möglich.

Vor allem bei der Verwendung eines Akkus und/oder einer Batterie zur zusätzlichen Energieversorgung kann dieser bzw. diese alternativ oder in Kombination zugleich als Zwischenspeicher bzw. wenigstens teilweise aufladbarer Energiespeicher von Solarenergie und insbesondere zur Zufuhr nicht solarer Energie dienen.

In einer vorteilhaften Weiterbildung der Erfindung wird die Solarzelle auf die Wellenlänge bzw. Frequenz des in geschlossenen Räumen zu erwartenden Lichts spezifisch ausgelegt. Hierbei ist insbesondere eine Anpassung an eine künstliche Beleuchtung von Vorteil. In öffentlichen Gebäuden sind häufig Toiletten anzutreffen, die ohne Fenster ausgebildet sind, jedoch dauerhaft mit Kunstlicht beleuchtet werden. Mit einer Auslegung der Solarzelle auf das Emissionsspektrum der entsprechenden Leuchtquellen, beispielsweise Leuchtgasröhren oder dergleichen ist eine optimale Energieausbeute und somit eine weitere Verlängerung der Batterielebensdauer möglich.

In einer besonderen Ausführungsform werden wenigstens zwei Solarzellen vorgesehen, die an unterschiedliche Lichtwellenlängen spezifisch ausgelegt sind. So kann beispielsweise eine Solarzelle auf die Raumbeleuchtung und die andere Solarzelle auf Tageslicht spezifisch ausgelegt sein. Hierdurch wird eine gute Energieausbeute auch bei wechselnden Lichtverhältnissen im jeweiligen Toilettenraum sichergestellt.

Denkbar wäre in diesem Zusammenhang auch die Verwendung einer Solarzelle, die variabel an die Wellenlänge des einfallenden Lichtes anzupassen ist, falls derartige Solarzellen in der Zukunft zu angemessenen Preisen verfügbar sind.

Weiterhin lässt sich eine sensorgesteuerte Spülung mit einer Solarenergiequelle dadurch verbessern, dass ein bistabiles elektromagnetisches Ventil zum Auslösen bzw. zur Beendigung der Spülung verwendet wird. Ein solches Ventil ist durch Schaltimpulse schaltbar und benötigt demnach keinen Dauerstrom. Der Energieverbrauch eines solchen Ventils, insbesondere in der Ausführung als sogenanntes Servoventil, wird hierdurch deutlich reduziert, wodurch auch in geschlossenen Räumen bei entsprechenden Lichtverhältnissen der Betrieb der Spülung ausschließlich über die Solarenergie möglich ist.

Generell kann das Klosett sowohl in sogenannter "Unterputzbauweise" als auch in "Aufputzbauweise" realisiert werden. Bei der Unterputzvariante wird das Klosettbecken bzw. das WC- oder Urinalbecken sowie im Allgemeinen eine Abdeckplatte oder dergleichen an der Toilettenwand angebracht. Die Spüleinheit mit Wasserleitung sowie ggf. mit Wassertank, Elektronik, Regelventil, usw. ist bei dieser Variante hinter bzw. in der Wand angeordnet. Die Abdeckplatte kann für Montage- und/oder Reparaturarbeiten an der Spüleinheit von der Wand entfernt werden.

Bei der Aufputzvariante wird das Klosettbecken bzw. das WCoder Urinalbecken sowie die Spüleinheit mit Wasserleitung, Regelventil, usw. vor der Toilettenwand angeordnet. Bei dieser Variante ist ein Teil der Spüleinheit häufig mit einem Gehäuse oder dergleichen versehen oder innerhalb des Wassertanks angeordnet.

Grundsätzlich können Klosette mit oder ohne Wassertank bzw. Spülkasten gemäß der Erfindung verwendet werden.

Vorzugsweise wird die Solarzelle und der Sensor zu einer Baueinheit zusammengefasst, die gegebenenfalls zusätzlich die elektronische Steuerung der Spülung beinhaltet. Hierdurch wird die Handlichkeit verbessert, was sich insbesondere vorteilhaft für die Wartung sowie die Montage eines erfindungsgemäßen Klosetts auswirkt.

Vorteilhafterweise ist die Baueinheit von der Wand beabstandet und/oder als separates Gehäuse mit oder ohne Wassertank ausgebildet. Beispielsweise können hierbei Klosette in Aufputzbauweise gemäß der Erfindung in besonders einfacher Weise nachgerüstet bzw. versehen werden. Häufig ist im separaten Gehäuse zusätzlich das Magnetventil oder dergleichen integriert.

Gegebenenfalls wird die Solarzelle separat an einer Wand der Toilette und/oder an dem Gehäuse der Spüleinheit, dem Wassertank bzw. Spülkasten oder dergleichen vor der Wand angeordnet bzw. befestigt. In einer bestimmten Ausführungsform der Erfindung wird eine oben erwähnte Baueinheit mit integriertem Sensor und Solarzelle als Wandabdeckung bzw. Abdeckplatte ausgebildet, die im Bereich des Klosetts an der Wand befestigt wird. In einer weiteren ebenfalls vorteilhaften Ausführungsform werden die Solarzelle und/oder der Sensor sowie gegebenenfalls die Steuereinheit einschließlich einer Batterie oder einem Akku in das Klosettbecken bzw. in das Spülbecken integriert. Mit dieser Ausführungsform wird vor allem die bauseitige Montage eines erfindungsgemäßen Klosetts erleichtert.

Neben der Funktion als Energiequelle wird in einer Weiterbildung der Erfindung die Solarzelle zugleich als Helligkeitssensor verwendet, beispielsweise für die Steuerung der sensorgesteuerten Klosettspülung. So können unterschiedliche Betriebsarten, beispielsweise wenig frequentierte Tageszeiten, lichtabhängig mit Hilfe der Solarzelle erfasst, ausgewertet und unterschiedlichste Betriebsmodi angesteuert werden. Beim Eindringen von Tageslicht in die Toilette und/oder beim Einschalten der Raumbeleuchtung der Toilette kann dies mit der Solarzelle als Helligkeitssensor erfasst und der gewünschte Betriebsmodus aktiviert werden. Die Helligkeit lässt sich beispielsweise durch Auswertung der von der Solarzelle aktuell zur Verfügung gestellten elektrischen Leistung erfassen.

Darüber hinaus kann die Solarzelle als Helligkeitssensor auch für weitere nicht klosettspezifische Funktionen verwendet werden. So kann beispielsweise eine Raumbeleuchtung, Belüftung, usw. mit Hilfe einer solchen Helligkeitssensorik gesteuert werden.

Eine besondere Weiterbildung des erfindungsgemäßen Klosetts umfasst weiterhin eine busfähige Schnittstelle. Mittels einer solchen Schnittstelle kann einerseits die elektronische Steuerung der Klosettspülung programmiert oder angesteuert werden. Anderseits können über eine solche Schnittstelle auch anderweitige im Raum befindliche Komponenten, z.B. eine Steuerung zur Raumbeleuchtung bzw. Belüftung mit der Klosettsteuerung beispielsweise zur Übermittlung der mit der Solarzelle erfassten Daten über die Helligkeit im Innern des Raums kommunizieren.

In einer besonderen Weiterbildung dieser Ausführungsform wird die Verwendung eines drahtlosen Datenbusses, beispielsweise über Funk- bzw. Infrarot-, Ultraschall- oder Radarstrahlung vorgesehen, wodurch aufwendige bauseitige Verkabelungen entfallen. Dies ist insbesondere im Zusammenhang mit einem erfindungsgemäßen Klosett mit Solarzelle von Bedeutung, da die Vorteile eines solchen Klosetts besonders darin liegen, dass keine aufwendige Verkabelung erforderlich ist.

In einer besonderen Weiterbildung der Erfindung wird zur Realisierung der drahtlosen Busschnittstelle der Sensor des Klosetts verwendet. Derartige Sensoren, die häufig als Infrarot- oder Ultraschallsensor ausgebildet sind, weisen üblicherweise ein Sende- und ein Empfangsteil für die entsprechende Strahlung auf. In der beschriebenen Weiterbildung der Erfindung können nun der Sender- und Empfänger des Sensors zur drahtlosen Datenübertragung eingesetzt werden.

Grundsätzlich können neben der Verwendung eines Infrarot-, Ultraschall- oder Radar-Sensors auch sonstige, gebräuchliche Sensoren vor allem zur indirekten Erfassung eines Benutzers des Klosetts verwendet werden, wie beispielsweise Leitwert-, Temperatur-, pH-, Niveau-Sensoren oder dergleichen.

Ein Ausführungsbeispiel der Erfindung ist in der Zeichnung dargestellt und wird anhand der Figuren nachfolgend näher erläutert.

Im Einzelnen zeigen
- Figur 1: ein Blockschaltbild eines erfindungsgemäßen Klosetts,
- Figur 2: eine Draufsicht auf ein Ausführungsbeispiel einer Baueinheit mit integrierter Sensorik und Solarzelle,
- Figur 3: eine Stirnansicht einer Baueinheit gemäß Figur 2 und
- Figur 4: vier schematisch dargestellte Varianten erfindungsgemäßer Klosette.

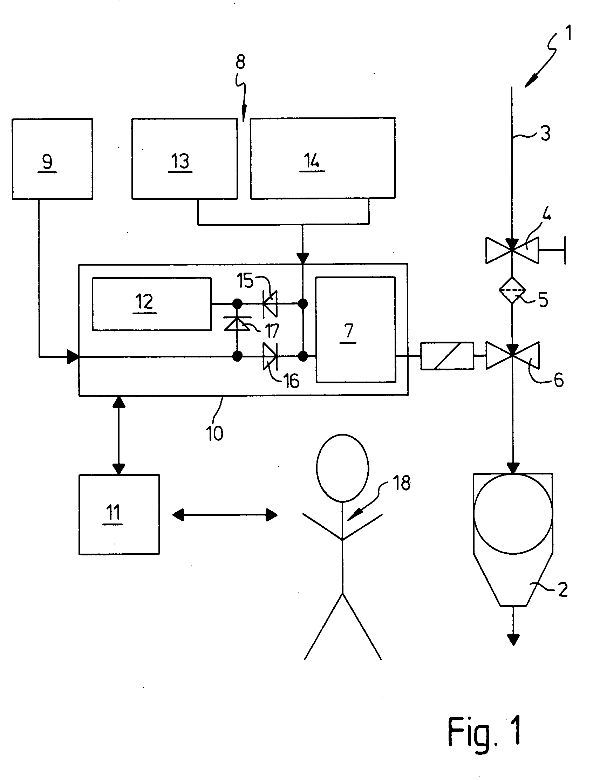

In Figur 1 ist ein komplettes Klosett bzw. Urinal 1 mit einem Sanitärkörper 2 bzw. Urinalbecken 2 als Blockschaltbild dargestellt. Das Urinalbecken 2 wird über eine Wasserleitung 3 mit Spülwasser versorgt. Ein Sperrventil 4 sowie ein Filter 5 sind in der Wasserleitung 3 angeordnet. Das Absperrventil 4 gibt hierbei die Möglichkeit der Sperrung der Wasserleitung 3, beispielsweise zur Montage oder Demontage des Urinals 1. Das Wasserfilter 5 sorgt für eine Wasserreinigung, so dass ein nachfolgend geschaltetes bistabiles Magnetventil 6 nicht von etwaigen Schmutzpartikeln beeinträchtigt oder verstopft wird.

Das bistabile Magnetventil wird über eine Schaltstufe 7 geschaltet. Die Schaltstufe 7 wird hierbei wahlweise von einer Solareinheit 8 oder einem Akku 9 versorgt.

Die Schaltstufe 7 ist als Bestandteil einer Steuerelektronik 10 dargestellt, die bidirektional mit einer Sensorik 11 verbunden ist.
Die Elektronik 10 wird über eine Versorgungseinheit 12 mit Energie versorgt, die die erforderlichen Spannungs- und Stromwerte bereitstellt.

Die Solareinheit 8 umfasst einerseits wenigstens eine Solarzelle 13 und andererseits einen Energiespeicher 14, z.B. einen Kondensator 14. Die Solarzelle 13 und der Kondensator 14 sind parallel geschaltet und sowohl mit der Schaltstufe 7 als auch mit der Versorgungseinheit 12 verbunden. Die Energieversorgung sowohl der Schaltstufe 7 als auch der Versorgungseinheit 12 wird wahlweise vom Akku 9 oder der Solareinheit 8 übernommen. Unterschreitet die Kondensatorspannung, die der Solarspannung an der Solarzelle 13 entspricht, einen bestimmten Schwellwert der elektrischen Spannung, so übernimmt der Akku 9 die Energieversorgung. Wird der Schwellwert wieder überschritten, so findet die Energieversorgung aus dem Kondensator 14 bzw. der Solarzelle 13 statt.

In einer besonderen Variante der Erfindung kann der Akku 9 und/oder der Kondensator 14 mittels der Solarzelle 13 mit Energie versorgt werden. Gegebenenfalls ist der Energiespeicher 14 zugleich als elektrischer Speicher 9 auszubilden.

Über die Dioden 15, 16, 17 ist die Speisung der Schaltstufe 7 und die Speisung der Versorgungseinheit 12 voneinander entkoppelt, so dass gegenseitige Beeinträchtigungen, beispielsweise durch Spannungsschwankungen beim Schalten des Magnetventils 6 oder dergleichen unterbunden sind.

Die Sensorik 11 erfasst die Anwesenheit eines Benutzers 18, der sich vor der Sensorik 11 befindet. Dementsprechend ist die Sensorik räumlich in Bezug zum Sanitärkörper 2 so anzuordnen, dass die Person 18 dann erfasst wird, wenn sie vor dem Klosett 1 steht. Hierfür kann insbesondere zur direkten Erfassung des Benutzers 18 eine Infrarot-, Ultraschall- Radar-Sensorik oder dergleichen verwendet werden. Dies ist in der Darstellung gemäß Figur 1 als Blockschaltbild in dieser Form nicht erkennbar.

Darüber hinaus kann auch zur indirekten Erfassung des Benutzers 18 beispielsweise eine Leitwert-, Temperatur-, pH-, Niveau-Sensorik oder dergleichen verwendet werden. Bei diesen Ausführungsformen werden entsprechende Änderungen der Siphon-Flüssigkeit detektiert und mittels der Steuerelektronik 10, die eine nicht näher dargestellte Auswerteeinheit hierfür umfasst, ausgewertet.

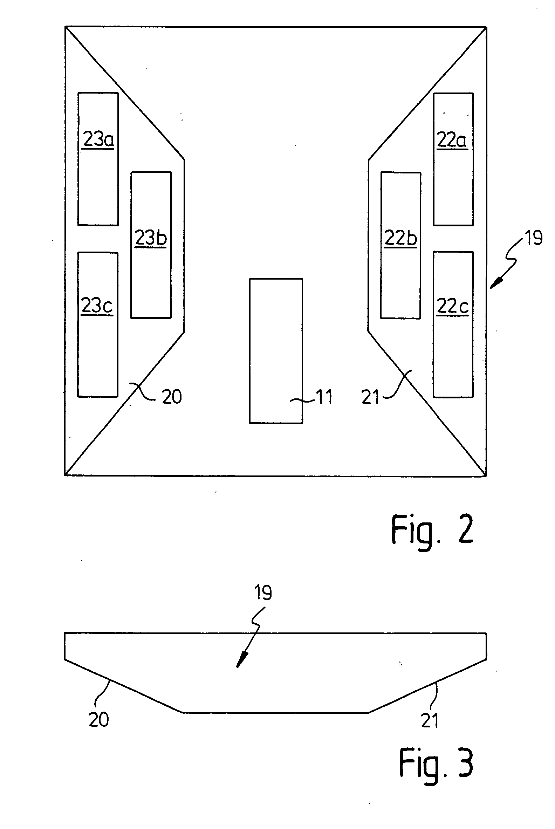

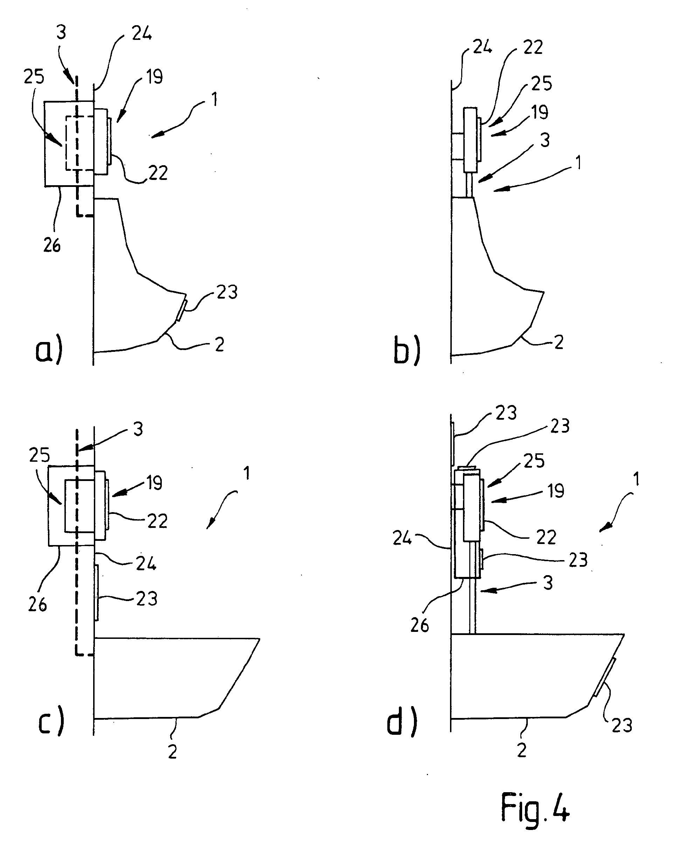

In Figur 2 ist beispielhaft eine Baueinheit 19 in Form einer Abdeckplatte dargestellt, die beispielsweise an einer Wand 24 oberhalb oder unterhalb eines Klosettbeckens 2 befestigbar ist (vgl. auch Figur 4 a, b). Die Sensorik 11 ist hierbei vorzugsweise zentral angeordnet, wodurch sie unmittelbar vor der Baueinheit 19 befindliche Benutzer 18 gut erkennen kann.

An seitlichen, abgeschrägten Flächen 20, 21 (vgl. insbesondere auch Figur 3) sind im vorliegenden Ausführungsbeispiel gemäß Figur 2 jeweils drei Solarzellen 22 a, b, c bzw. 23, a, b, c angebracht. Durch die Verwendung mehrerer Solarzellen 22 a, b, c bzw. 23 a, b, c ist eine höhere Energieausbeute trotz der Verwendung kleinerer und damit kostengünstigerer Solarzellen 22, 23 möglich. Darüber hinaus bietet die Verwendung einer Vielzahl von Solarzellen 22, 23 auch den Vorteil, dass im Falle eines Ausfalls einer Solarzelle 22, 23 nicht die komplette Solareinheit 8, sondern nur die jeweilige Solarzelle 22 a, b, c bzw. 23 a, b, c mit ihrem entsprechenden Anteil an der gesamten Leistung der Solareinheit 8 ausfällt. Weiterhin können die verschiedenen Solarzellen an unterschiedliche Wellenlängen angepasst sein.

Durch die Anordnung an den abgeschrägten Flächen 20, 21 ist die Solareinheit 8 in der Lage, auch seitlich einfallendes Licht zu nutzen. In einer Weiterbildung dieser Ausführungsform sind derartige Abschrägungen auch an der Ober- bzw. Unterseite der Baueinheit 19 denkbar.

In Figur 4 sind mehrere Klosett-Varianten gemäß der Erfindung dargestellt. Die Figuren 4a und 4c betreffen ein Urinal 1 bzw. WC 1 in sogenannter "Unterputzbauweise". Hierbei sind vor allem die Wasserleitung 3 mit oder ohne vorzugsweise alternativ vorzusehendem Wassertank 26 bzw. Spülkasten 26 sowie eine Steuerung 25 in der Wand 24 bzw. "unter dem Putz" montiert. Die Abdeckplatte 19 umfasst hierbei insbesondere die Solareinheit 8 als auch die Sensorik 11. In der Steuerung 25 ist unter anderem das Ventil 6, der Filter 5, usw. integriert.

Alternativ zur Abdeckplatte 19 gemäß Figur 3 kann diese ohne Solarzellen 22, 23 ausgebildet werden. Bei dieser Ausführung sind beispielsweise die Solarzellen 22, 23 an der Wand 24 und/oder am Sanitärkörper 2 angebracht.

Die Figuren 4b und 4d zeigen ein Urinal 1 bzw. WC 1 in sogenannter "Aufputzbauweise". Das bedeutet, dass vor allem die Wasserleitung 3 sowie die Steuerung 25 bzw. die Baueinheit 19 mit oder ohne vorzugsweise alternativ vorzusehendem Wassertank 26 bzw. Spülkasten 26 vor der Wand 24, d.h. "auf dem Putz", montiert sind. Hierbei können die Solarzellen 22, 23 wiederum an der Baueinheit 19, am Wassertank 26 bzw. Spülkasten 26, an der Wand 24 und/oder am Sanitärkörper 2 angebracht werden. In Figur 4b ist lediglich aus Gründen der Übersichtlichkeit der alternativ vorzusehende Wassertank 26 bzw. Spülkasten 26 nicht dargestellt.

Neben den dargestellten Ausführungsbeispielen sind auch weitere erfindungsgemäße Ausführungsformen denkbar, beispielsweise die Integration der Sensorik 11 samt Energieversorgung und Steuerung 25 in ein als komplette Baueinheit montierbares WC 1 bzw. Urinal 1, das in diesem Fall lediglich noch mit dem Wasseranschluss verbunden werden muss.

### Bezugszeichenliste:

- 1: Klosett
- 2: Klosettbecken
- 3: Wasserleitung
- 4: Absperrventil
- 5: Filter
- 6: Magnetventil
- 7: Schaltstufe
- 8: Solareinheit
- 9: Akku
- 10: Steuerelektronik
- 11: Sensorik
- 12: Versorgungseinheit
- 13: Solarzelle
- 14: Kondensator
- 15: Diode
- 16: Diode
- 17: Diode
- 18: Benutzer
- 19: Baueinheit
- 20: abgeschrägte Fläche
- 21: abgeschrägte Fläche
- 22 a: Solarzelle
- 22 b: Solarzelle
- 22 c: Solarzelle
- 23 a: Solarzelle
- 23 b: Solarzelle
- 23 c: Solarzelle
- 24: Wand
- 25: Steuerung
- 26: Wassertank

## Patentansprüche

1. Klosett (1), insbesondere Wasserklosett bzw. Urinal, mit einer Sensoreinheit und einem elektromagnetischen Ventil zur sensorgesteuerten Spülung, **dadurch gekennzeichnet, dass** eine Solarzelle für die elektrische Energieversorgung vorgesehen ist.

2. Klosett (1) nach Anspruch 1, **dadurch gekennzeichnet, dass** ein aufladbarer Energiespeicher (14) für die Solarzelle (13) vorgesehen ist.

3. Klosett (1) nach einem der vorgenannten Ansprüche, **dadurch gekennzeichnet, dass** ein Kondensator (14) als aufladbarer Energiespeicher (14) für die Solarzelle (13) vorgesehen ist.

4. Klosett (1) nach einem der vorgenannten Ansprüche, **dadurch gekennzeichnet, dass** eine Batterie (9) oder ein Akku (9) zur zusätzlichen, nicht solaren Energieversorgung vorgesehen ist.

5. Klosett (1) nach einem der vorgenannten Ansprüche, **dadurch gekennzeichnet, dass** wenigstens eine Solarzelle (13) mit einer Auslegung auf eine künstliche Raumbeleuchtung vorgesehen ist.

6. Klosett (1) nach einem der vorgenannten Ansprüche, **dadurch gekennzeichnet, dass** wenigstens zwei Solarzellen (13) mit einer Auslegung auf unterschiedliche Lichtfrequenzen vorgesehen sind.

7. Klosett (1) nach einem der vorgenannten Ansprüche, **dadurch gekennzeichnet, dass** ein bistabiles elektromagnetisches Ventil (6) vorgesehen ist.

8. Klosett (1) nach einem der vorgenannten Ansprüche, **dadurch gekennzeichnet, dass** der Sensor (11) und die Solarzelle (13) in eine Baueinheit (19, 25) integriert sind.

9. Klosett (1) nach einem der vorgenannten Ansprüche, **dadurch gekennzeichnet, dass** die Baueinheit (19, 25) mit integriertem Sensor (11) und integrierter Solarzelle (13) als Wandabdeckung (19) ausgebildet ist.

10. Klosett (1) nach einem der vorgenannten Ansprüche, **dadurch gekennzeichnet, dass** die Baueinheit (19, 25) von der Wand (24) beabstandet als separates Gehäuse (19, 25) ausgebildet ist.

11. Klosett (1) nach einem der vorgenannten Ansprüche, **dadurch gekennzeichnet, dass** der Sensor (11) und/oder die Solarzelle (13) in den Körper eines Klosettbeckens (2) integriert sind.

12. Klosett (1) nach einem der vorgenannten Ansprüche, **dadurch gekennzeichnet, dass** die Solarzelle (13) in der Wand (24) integriert ist.

13. Klosett (1) nach einem der vorgenannten Ansprüche, **dadurch gekennzeichnet, dass** die Solarzelle (13) als Helligkeitssensor ausgebildet ist.

14. Klosett (1) nach einem der vorgenannten Ansprüche, **dadurch gekennzeichnet, dass** eine busfähige Schnittstelle vorhanden ist.

15. Klosett (1) nach einem der vorgenannten Ansprüche, **dadurch gekennzeichnet, dass** die busfähige Schnittstelle für eine drahtlose Datenübertragung ausgebildet ist.

16. Klosett (1) nach einem der vorgenannten Ansprüche, **dadurch gekennzeichnet, dass** der Sensor (11) für die Klosettspülung zugleich für die drahtlose Datenübertragung vorgesehen ist.
